# EUROPÄISCHE PATENTSCHRIFT

(11) **EP 1 005 598 B1**
(45) Veröffentlichungstag und Bekanntmachung des Hinweises auf die Patenterteilung: **04.10.2001**
(21) Anmeldenummer: 98949912.4
(22) Anmeldetag: 18.08.1998
(51) Int. Cl.: E04G 7/30

(54) **FACHWERK-MODULGERÜSTSYSTEM**
TRELLISWORK MODULAR SCAFFOLDING SYSTEM
SYSTEME D'ECHAFAUDAGE MODULAIRE EN TREILLIS

(30) Priorität: 23.08.1997 DE 29715170 U
(43) Veröffentlichungstag der Anmeldung: 07.06.2000
(73) Patentinhaber: Merkel, Gerald, Nassau, Bahamas (BS)
(72) Erfinder: Merkel, Gerald, Nassau, Bahamas (BS)
(74) Vertreter: Heyner, Klaus, Dr.-Ing.
(86) Internationale Anmeldenummer: DE9802397
(87) Internationale Veröffentlichungsnummer: WO9910612

(56) Entgegenhaltungen:
- EP-A2- 0 645 507
- GB-A- 2 090 367
- US-A- 4 405 254
- US-A- 4 525 096

## Beschreibung

Die Erfindung bezieht sich auf ein Gerüstsystem oder Gestell für die unterschiedlichsten Aufgaben und Einsatzgebiete mit Ständerrohren sowie Horizontal- und/oder Diagonalriegeln, wobei an jedem Ständerrohr ein oder mehrere mit Abstand übereinander positionierte Gerüstknoten angeordnet sind, an denen die Anschlußelemente eingreifen.

Gerüste dieser Bauart gehören seit Jahren zum Stand der Technik.

Aus US-A-3 420 557 ist ein Baugerüst bekannt, bei dem die Gerüstknoten vier Keiltaschen aufweisen, in die Horizontal- und Diagonalriegel über keilförmige Steckelemente eingreifen.
Nachteilig ist hier, daß zur Montage eines Horizontalriegels der Anschlußkopf des Riegels mittels eines separaten losen, unverlierbaren Keils mit der Keiltasche verbunden wird. Bei dem hier vorgeschlagenen Diagonalriegel sind die Keilköpfe über mechanisch gering belastbare Nietverbindungen drehbar mit den Enden einer Diagonalstrebe verbunden.

Entscheidendes Kriterium für die Gebrauchseigenschaften von Modulgerüstsystemen ist die Beanspruchbarkeit des Knotens beim Anschluß der Riegel und Diagonalen, was durch die sogenannten Anschlußschnittgrößen festgeschrieben wird. Die wichtigsten Anschlußschnittgrößen für die Knotenbeanspruchbarkeit sind die Biegemomente, die Quer-, Normal- und Diagonalkräfte. Je besser diese Werte sind, um so wirtschaftlichere Konstruktionen können errichtet werden, weil weniger Material benötigt wird.

Auf dem Weltmarkt bekannte Modulgerüstsysteme von Layher, Plettac, Rux, Hünnebeck-Röro, Cuplok u.a. verwenden Gerüstknoten, die in ihrer Form nur wenig voneinander abweichen und von daher bezüglich ihrer Wirtschaftlichkeit und den Gebrauchseigenschaften etwa auf einem Niveau liegen. Der bisher zugrunde liegende konstruktive Aufbau der Gerüstknoten ist geprägt durch die Lochscheiben- und Lochschalenausführung nach EP-A-0389 933, WO 97/49880 (veröffentlicht am 31.12.97) bzw. DE-A-37 15 296, die Teller- und Tassenform mit Ständerrosetten nach EP-A-0116 679.

Bei Modulgerüsten werden Gerüststangen als Distanzelemente in horizontaler und vertikaler Richtung mittels Knotenelementen zu zwei- oder dreidimensionalen Gerüstbauten in Form von Fassaden-, Raum- und sonstigen Gerüstkonstruktionen montiert.
Für variablere Einsetzbarkeit, verbesserte Gebrauchseigenschaften, wirtschaftlichere Konstruktionsmöglichkeiten und einen verringerten Herstellungsaufwand von Modulgerüsten und deren Systembauteilen, für ihre effektive sowie weniger zeitaufwendige Montage sind material-reduzierte Lösungen mit höheren Knotentragfähigkeiten bzw. höheren Anschlußschnittgrößen für Modulgerüstsysteme gefragt.

Diese Systemelemente müssen so aufgebaut sein und in ihrem Zusammenwirken, in ihrer konstruktiven und mechanischen Verbindung zur Aufnahme von Kräften, Lasten und Biegemomenten so harmonieren, daß alle sicherheitstechnischen Anforderungen zuverlässig erfüllt werden. Die sicherheitstechnischen Anforderungen beziehen sich ebenfalls auf den bisher vorgeschriebenen Einbau von Abhebesicherungen. Abhebesicherungen sind zusätzlich erforderliche Systembauelemente mit einer Sicherheitsvorrichtung, die bei Wind und Sturm ein Abheben der Systembeläge verhindern.

Vertikaldiagonalenverstrebungen und Horizontaldiagonalenverstrebungen (Diagonalriegel) bei Modulgerüsten sind zur Aufnahme und Ableitung von Diagonalkräften und somit auch für Fachwerkkonstruktionen mit Gerüstelementen zur Gewährleistung der erforderlichen Stabilität und Sicherheit notwendig.

Die am Markt bekannten Vertikaldiagonalenverstrebungen, die bei Modulgerüstsystemen der meisten Hersteller zum Einsatz kommen, sind in der möglichen Diagonalkraft in den Gerüstknoten vergleichsweise gering belastbar.

Die Ursachen für diese relativ niedrigen Werte der zulässigen Lasteintragung sind im technischen Aufbau der bekannten Vertikaldiagonalenverstrebungen zu suchen. Für die bekannten Knotenanschlußvarianten, ob Scheibe, Teller oder Tasse, ist die zulässige maximale Lasteintragung der Diagonalkräfte in die Knotenverbindung relativ gering und daher für Fachwerksonderkonstruktionen aus Ständerrohren, Horizontal- und Diagonalriegeln wenig geeignet.

Ein Modulgerüstknoten mit wesentlich verbesserten Anschlußwerten wird in EP-B-0622 504 beschrieben. Ein Gerüstknoten nach dieses Lösung besitzt vier Keiltaschen, in die über keilförmige Steckelemente die Anschlußelemente eingreifen.
Keiltaschen und keilförmige Steckelemente weisen eine analoge Paßform auf, wobei die Keiltaschen mit parallel zueinander verlaufenden Wandungen ausgebildet sind.

Aufgabe der Erfindung ist es, zur Gewährleistung der Fassadengerüsttauglichkeit und der Fachwerktauglichkeit eines Modulgerüstsystems den technischen und konstruktiven Aufbau der Systembauteile, insbesondere Gerüstbeläge, Gerüstknoten und Anschlußelemente sowie die dazugehörige Vertikaldiagonale und sonstige Systembauteile, so weiterzuentwickeln, daß die Anschlußschnittgrößen bzw. Knotenbeanspruchbarkeit und die Stabilität parallel zur Fassade des Keiltaschen-Modulgerüstsystems im Zusammenwirken aller Systembauteile weiter erhöht wird und die neuesten Zulassungsrichtlinien - auch bei cyclischer und dynamischer Beanspruchung - erfüllt werden.

Fassadengerüsttauglichkeit heißt, durch weiter entwickelte Gerüstbauelemente die Steifigkeit parallel zur Fassade durch technisch-konstruktive Maßnahmen soweit zu erhöhen, daß die Zulassungsvoraussetzungen für sämtliche Regelausführungsvarianten als Fassadengerüst ohne Einschränkungen (bis zum 8 m-Ankerraster) erfüllt werden. Das bedeutet Optimierung des Material-, Lager- und Transportaufwandes, da nur noch ein Gerüstsystem zur Abdeckung aller Anwendungsbereiche notwendig ist. Da der Herstellungsaufwand dieses weiterentwickelten KT-Modulgerüstsystems annähernd gleich bzw. geringer ist als der eines Rahmengerüstsystems, ergibt es auch keinen Sinn, mehrere Gerüstsysteme anzuschaffen bzw. vorzuhalten, wie es bisher bei Gerüstbaufirmen üblich gewesen ist.

Fachwerktauglichkeit heißt, die zulässigen Anschlußschnittgrößen durch technisch-konstruktive Maßnahmen weiter zu erhöhen, so daß u.a. der Anschlußwert hinsichtlich der zulässigen Zugkraft der Vertikaldiagonale etwa der ebenfalls weiter zu erhöhenden zulässigen Normalkraftanschlußschnittgröße des Gerüstknotens (positiv und negativ) entspricht.

Eine erfindungsgemäße Lösung dieser Aufgabe ist im Anspruch 1 angegeben. Weiterbildungen der Erfindung sind in den Unteransprüchen gekennzeichnet.
Bei Keiltaschen-Modulgerüsten oder Gerüsten mit Keil-Steckverbindungen von Gerüstknoten und Anschlußelementen greifen die an den Distanzriegelenden vorhandenen keilförmigen Steckelemente in mit vom Querschnitt der Steckelemente abweichender Geometrie ausgeführte Keiltaschen ein.
Die keilförmigen Steckelemente sind dabei fest mit den Distanzriegelenden verbunden. Nach der Montage der horizontalen Anschlußelemente sind die keilförmigen Steckelemente so in den Keiltaschen positioniert, daß sie mit ihren Schmalseiten sowohl am Ständerrohr als auch an der dem Ständerohr (3) abgewandten Stirnseite der Keiltasche (6) anliegen.
Das beidseitige Anliegen der keilförmigen Steckelemente über ihre Schmalseiten, die sogenannten Keilflächen-Schnittkanten, gewährleistet in Verbindung mit der Ausführung dieser Schmalseiten die hohe Belastungsfähigkeit der Steckverbindung. Dazu weisen die Keilflächen-Schnittkanten neben dem bekannten geraden einen konkav nach innen gewölbten Verlauf auf.
Die konkave Wölbungstiefe kann 0,5 mm betragen. Darüber hinaus besitzen die Keilflächen-Schnittkanten eine exakt definierte Oberfläche. Sie weisen dabei neben der definierten konkaven Wölbung auch eine bestimmte Oberflächenrauhigkeit mit einer Rauhigkeitstiefe von 120 µm auf.

Die keilförmigen Steckelemente können analog zum Stand der Technik mit rechteckigem Querschnitt, d.h. mit zueinander parallelen Flanken ausgeführt werden, sie können aber auch einen balligen Querschnitt aufweisen, d.h. die Flanken besitzen eine Krümmung.
In einer speziellen Ausführungsform nimmt der Krümmungswinkel β, ausgehend von der dem Ständerrohr zugewandten Stirnseite des keilförmigen Steckelementes, beginnend mit dem Winkel β = 0 zu.

Die Aufnahmeöffnungen der Keiltaschen sind mit einer deutlich größeren Weite im Vergleich zur Dicke der keilförmigen Steckelemente ausgeführt, so daß aufjeder Seite ein Spielraum von etwa 1 mm zwischen den Flanken der keilförmigen Steckelemente und den Innenwandungen der Keiltaschen gegeben ist.

In einer weiteren bevorzugten Ausführungsform wird der gewollte Spielraum zur radialen Verdrehung des keilförmigen Steckelementes in der Keiltasche dadurch erreicht, daß die Seitenteile der Keiltasche nicht parallel zueinander sondern vom Ständerrohr weg aufeinander zu verlaufen. Auf diese Weise erhält die Keiltasche im Querschnitt eine vom Ständerrohr wegweisende Keilform mit stumpfer Spitze.

Mittels der beschriebenen Verbindungspaarung Keiltasche - keilförmiges Steckelement werden die horizontalen Anschlußelemente montiert.
Die Diagonalriegel werden mittels Keilköpfen, die an jeder Seite einer Diagonalenstrebe fest und nicht verdrehbar angeordnet sind und die über die jeweilige Keiltasche geschoben werden, montiert.

Eine erfindungsgemäße Vertikaldiagonalenstrebe besteht aus einem Rohr der Länge L, das an seinen beiden Enden im von der Länge L abhängigen Winkel α schräg abgeschnitten ist, und je einem auf diesen Enden in Querstellung, d.h. mit der Breitseite aufsitzenden Keilkopf. Die feste Verbindung von Keilkopf und Diagonalenstrebe erfolgt beispielsweise mittels Schweißen.

Der Keilkopf ist ein quaderförmiger Hohlkörper, der zwei Breitseiten, zwei schmale Stirnseiten mit Auskehlung und Aufnahmeöffnungen für die Keiltasche sowie eine Oberseite und eine Unterseite jeweils mit schlitzförmiger Öffnung für das Einschieben eines unverlierbaren Keils aufweist. An der Breitseite ist das mit seinen schräg geschnittenen Enden im Winkel α aufsitzende Rohr der Diagonalenstrebe angeschweißt.

Über die Auskehlung an der schmalen Stirnseite liegt der Keilkopf der Vertikaldiagonalenstrebe, die mittels ihrer in der schmalen Stirnseite befindlichen Aufnahmeöffnung auf die Keiltasche des Ständerrohres aufgeschoben wurde, in Einbauposition flächig im Knotenbereich an der Wandung des Ständerrohres an.
Die Fixierung der Vertikaldiagonalenverstrebung, d.h. des Keilkopfes in dieser Einbauposition und die nachfolgenden Verriegelung und Verspannung erfolgt durch das Einschieben bzw. Einschlagen (Prellschlag) eines sich in der Ebene der Breitseite und der Keiltasche erstreckenden Keils. Dieser Keil durchläuft die schlitzförmige Öffnung in der Oberseite des Keilkopfes, die Keiltasche und tritt aus der schlitzförmigen Öffnung in der Unterseite des Keilkopfes wieder aus.

Diese erfindungsgemäße Knotenverbindung führt zu einer kraftschlüssigen Verbindung der Vertikaldiagonalenverstrebung mit dem Ständerrohr.
Dadurch wird ein großer Teil der über die Vertikaldiagonalenverstrebung angreifenden Last mit einer sehr geringen Hebelwirkung direkt in das Ständerrohr eingeleitet.

Die für die Zulassung als Fassadengerüst notwendige Horizontalsteifigkeit wird erreicht durch den Einbau von System-Gerüstbelägen mit Rohrriegelauflage und selbsttätiger Aushebesicherung, die von der Schwerkraft angetrieben wird. Durch die erfindungsgemäße Lösung, nämlich im Systembelag integrierte, durch Schwerkraft selbsttätig wirkende Abhebesicherungen kann auf die in bekannten Modulsystemen noch erforderlichen Abhebesicherungen verzichtet werden.

Durch das Zusammenwirken aller erfindungsgemäßen Gerüstbauteile im System und durch die im Vergleich zu bekannten Modulgerüstsystemen wesentlich höheren zulässigen Werte für die wichtigsten Anschlußschnittgrößen im Knoten ergeben sich im Zusammenspiel mit der kraftschlüssigen Verbindung der Gerüstbeläge mit Rohrriegelauflage und integrierter selbsttätiger Aushebesicherung zur Gewährleistung der Horizontalsteifigkeit eine Vielzahl von Vorteilen und wirtschaftlichere Konstruktionsmöglichkeiten. Hauptvorteil dabei ist, dass nur noch ein Gerüstsystem für alle Anwendungsfälle und Anwendungsbereiche erforderlich ist. U.a. kann der Anwendungsbereich von KT-Modulgerüsten auf das Einrüsten von Behälter- bzw. Rundbauten erweitert werden. Zusätzlich kann durch die erfindungsgemäßen Lösungen und weitere systemgebundene Bauteile, wie z.B. Konsolen, Einhänger für Auflageriegel und Schutzdachhalter entsprechend der bauaufsichtlichen Zulassungen Z-8.22 - 861 vom 14.06.99 (Knotenzulassung für den ingenieurtechnischen Gerüstbau) und die Fassadengerüstzulassung Z - 8.1 - 842 vom 19.12.97 des Instituts für Bautechnik Berlin die Flexibilität und Variierbarkeit des neuen Modulgerüstes erhöht werden.

Ein gravierender Vorteil ist die Verwendung des KT-Modulgerüstsystems nach Regelausführung mit einer Aufbau- und Verwendungsanleitung als Bestandteil der ersten rechtsgültigen und nach den neuesten Zulassungsrichtlinien erteilten bauaufsichtlichen Fassaden-Gerüst-Zulassung für ein Modulgerüstsystem. Dabei kann die Verwendung des neuen Gerüstsystems ohne zusätzlichen bisher erforderlichen Brauchbarkeitsnachweis in Form einer Statik für die verschiedenartigsten Aufbauvarianten als Fassadengerüst und der jeweils erforderlichen Zustimmung im Einzelfall erfolgen.

Neue bzw. wirtschaftlichere Konstruktionsmöglichkeiten und Vorteile im ingenieurtechnischen Gerüstbau ergeben sich auch aus der enorm hohen Beanspruchbarkeit des Vertikaldiagonalenanschlusses in Wechselwirkung mit den anderen verbesserten bzw. höheren Anschlußschnittgrößen im Gerüstknoten.
Solche Anwendungsbereiche betreffen z.B. den Trag-, Stütz- und Schalungsgerüstbau sowie die Montage und Demontage von Fachwerktragkonstruktionen wie Hallen, Hallendächer, Behelfsbrücken, Stellagen, Plattformen, Tribünen, Podien, Messestände und Werbeträger mit beliebiger Spannweite, Form und Größe.

Die Anwendung der erfindungsgemäßen Vertikaldiagonalenverstrebung hat eine beträchtliche Verbreiterung der Einsatzmöglichkeiten von Modulgerüsten für den effektiven Auf- und Abbau sowie die wirtschaftliche, einfache, leichte, schnelle und zuverlässige Montage von Gerüsten mit den vielfältigen Möglichkeiten für die Montage von Fachwerkkonstruktionen zur Folge.

Wesentliche Vorteile besonders beim Einsatz im Schalungsbau ergeben sich auch aus der Möglichkeit, ohne Spalt zwischen Belag und Gerüstständer zu arbeiten, da der Riegel in einer Ebene bis an den Ständer heranreicht.

In Gerüstkonstruktionen kann durch den beschriebenen neuartigen technischkonstruktiven Aufbau des Gerüstknotens mit wesentlich höheren Knotenbeanspruchbarkeiten, insbesondere durch die hohe Biegemomentenbeanspruchbarkeit im Riegelanschluß, die Zahl der erforderlichen Vertikaldiagonalenstreben beträchtlich verringert werden. Bei allen Regelausführungsvarianten der Fassadengerüste kann bis auf wenige Ausnahmefälle entsprechend der vorgenannten bauaufsichtlichen Zulassung auf den Einbau von Diagonalen ganz verzichtet werden.

Weitere Einzelheiten, Merkmale und Vorteile der Erfindung ergeben sich aus der nachfolgenden Beschreibung eines Ausführungsbeispiels unter Bezugnahme auf die zügehörige Zeichnung.

Es zeigen
Fig. 1 die Formgebung der keilförmigen Steckelemente,
Fig. 2 u. 3 die Geometrie der Keiltasche,
Fig. 4 den konstruktiven Aufbau des Keilkopfes,
Fig. 5 die Schnitte A-A und B-B durch den Keilkopf gemäß Fig. 4.2,
Fig. 6 den Keilkopf mit eingeschobenen Keil,
Fig. 7 eine komplette erfindungsgemäße Diagonalenstrebe,
Fig. 8 die Draufsicht auf eine Diagonalenstrebe in Einbauposition und
Fig. 9 den konstruktiven Aufbau eines erfindungsgemäßen Gerüstknotens mit Keiltaschen und zwei eingehängten Horizontalriegeln sowie einem eingehängten Diagonalriegel.

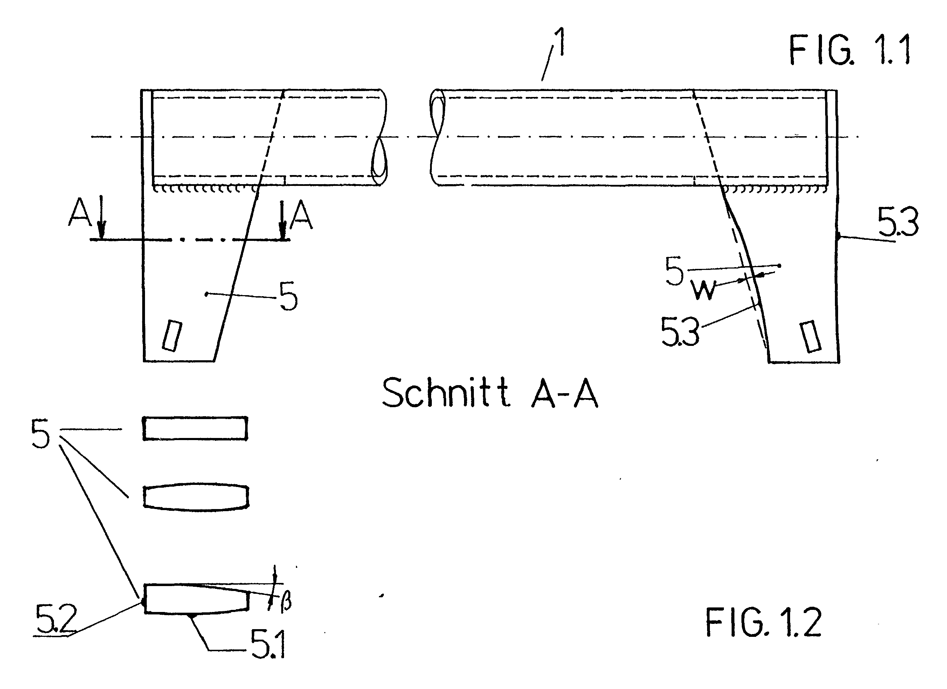

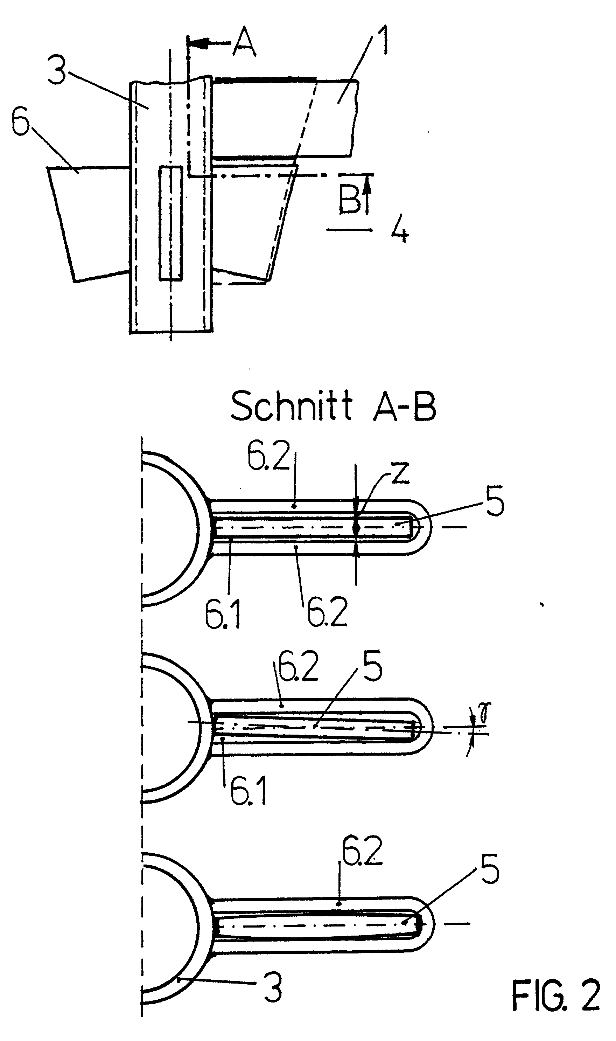

Fig. 1.1 zeigt die Ausführung eines Horizontalriegels 1 (Endstück) mit an den Seiten befestigten keilförmigen Steckelementen 5. Das rechte Riegelende in Fig. 1.1 ist mit einem keilförmigen Steckelement 5 bestückt, dessen Keilflächen-Schnittkanten 5.3 eine konkave Wölbung von etwa w = 0,5 mm nach innen aufweisen. Die Schnittkanten sind rechtwinklig ausgeführt und besitzen eine definierte Oberfläche mit einer Rauhigkeitstiefe von 120 µm. Die Schnittdarstellung A-A in Fig. 1.2 gibt eine Übersicht über die bevorzugten Querschnitte der keilförmigen Steckelemente 5.
Die Flanken 5.1 können auch ballig, d.h. mit einer Krümmung ausgeführt sein. In einer speziellen Ausführungsform (untere Darstellung in Fig. 1.2) beträgt der Krümmungswinkel an der dem Ständerrohr 3 (vgl. Fig. 2) zugewandten Stirnseite 5.2 β = 0 und nimmt in axialer Richtung des Horizontalriegels 1 zu.

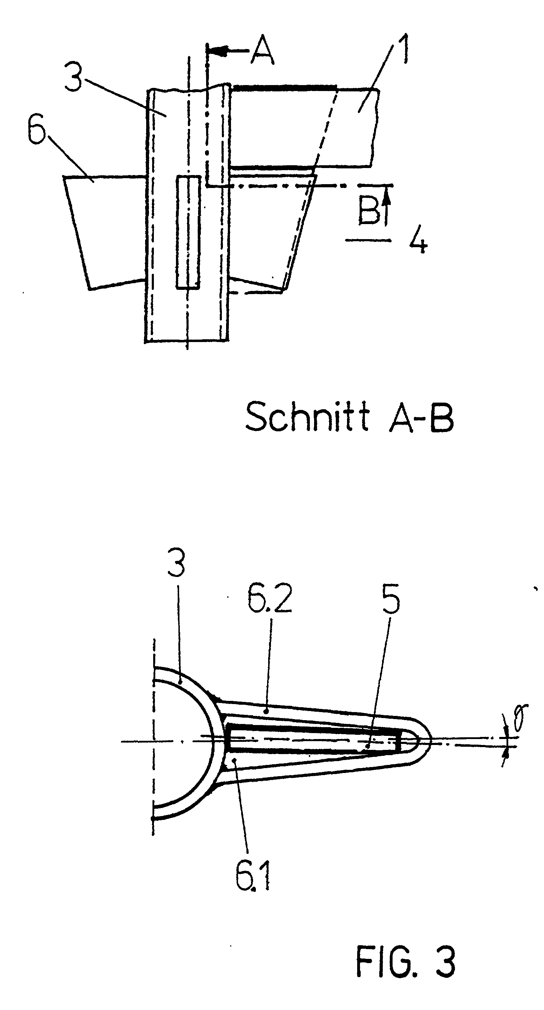

Die Fig. 2 und 3 veranschaulichen die Geometrie der Keiltasche 6, wobei jeweils vier Keiltaschen 6 als Gerüstknoten 4 in bestimmten Abständen an den Modulen des Ständerrohres 3 befestigt, vorzugsweise verschweißt sind.
Bei der ersten Ausführungsform der Keiltasche 6 in Fig. 2 (vergrößerte Schnittdarstellungen A-B) weist die Keiltasche parallele Seitenteile 6.2 auf, die eine Aufnahmeöffnung 6.1 mit einer deutlich größeren Weite im Vergleich zur Dicke des eingehängten keilförmigen Steckelementes 5 besitzt.
Der Zwischenraum bzw. Spielraum z zwischen den Flanken der keilförmigen Steckelemente 5 und den Innenwandungen der Seitenteile 6.2 der Keiltasche 6 beträgt etwa jeweils z = 1 mm.
Durch diese erfindungsgemäße Geometrie der Paarung keilförmige Steckelemente 5 und Keiltasche 6 wird die für das Einrüsten von Rundbauten vorteilhafte radiale Verdrehung der Horizontalriegel 1 um einen Winkel γ möglich.

In einer zweiten Ausführungsform der Keiltasche 6 nach Fig. 3 laufen die Seitenteile 6.2 der Keiltasche 6 aufeinander zu, so daß sich im Querschnitt ein konischer Verlauf der Seitenteile 6.2 ergibt.

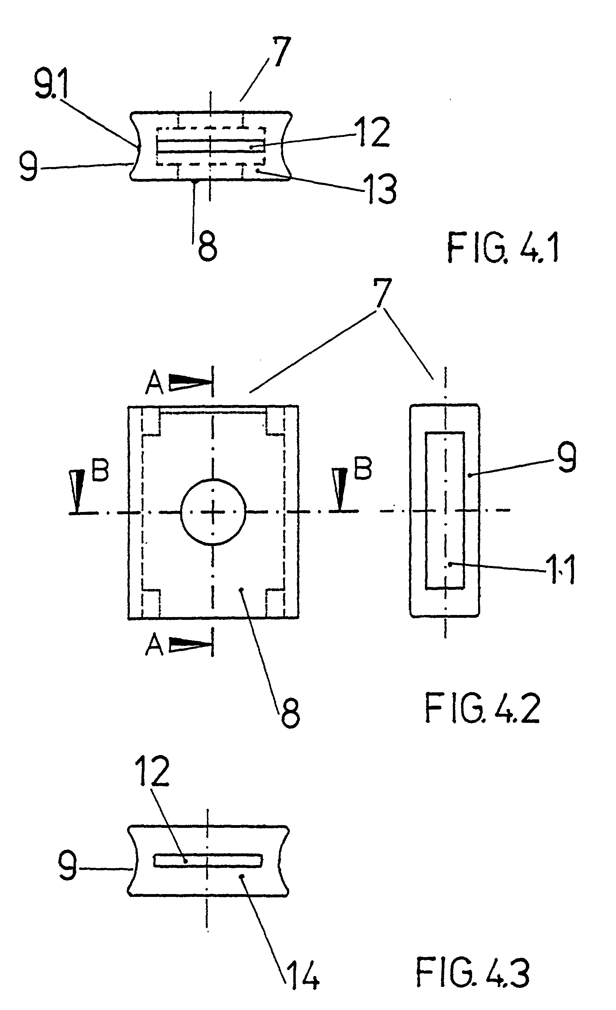

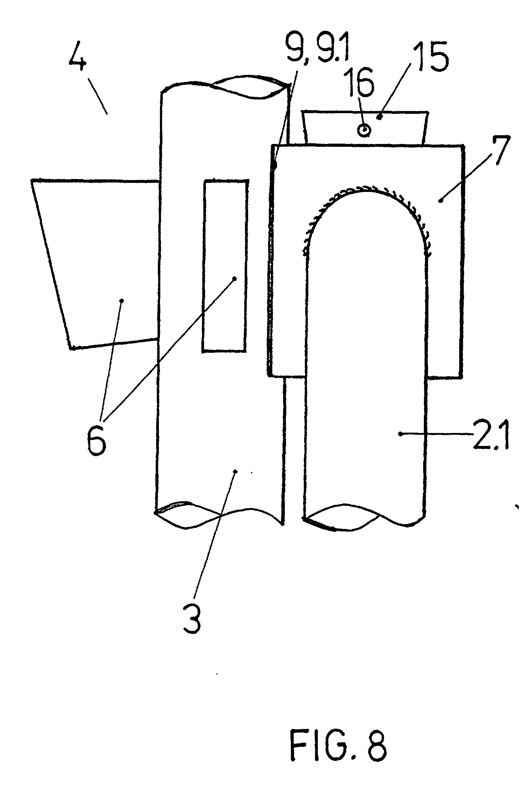

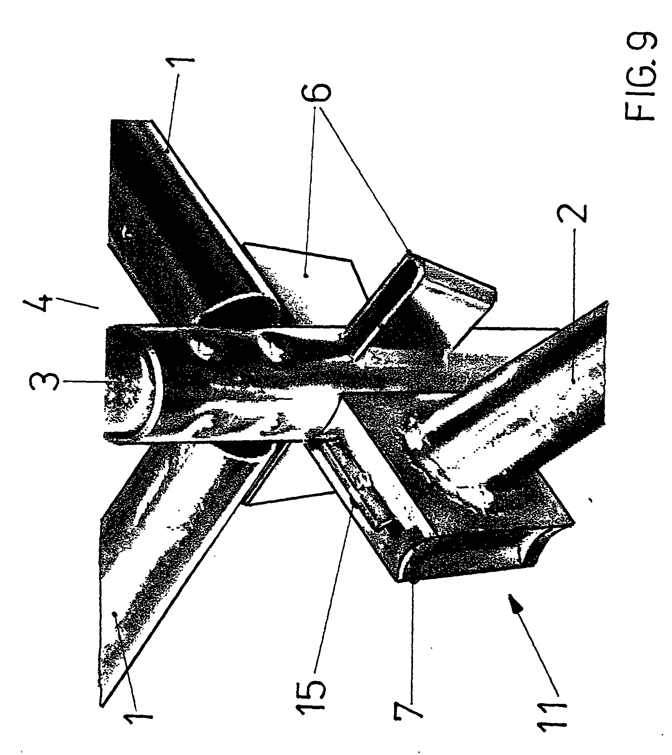

Fig. 4 veranschaulicht den konstruktiven Aufbau des als quaderförmigen Hohlkörper ausgebildeten Keilkopfes 7. Dargestellt sind in Fig. 4.1 die Oberseite 13 mit der schlitzförmigen Öffnung 12 für den Keil 15.
Die Mantellinie wird gebildet von den Breitseiten 8 und den schmalen Stirnseiten 9. Über die Auskehlung 9.1 liegt der Keilkopf 7 im Einbauzustand (vgl. Fig. 8 und 9) am Ständerrohr 3 an.

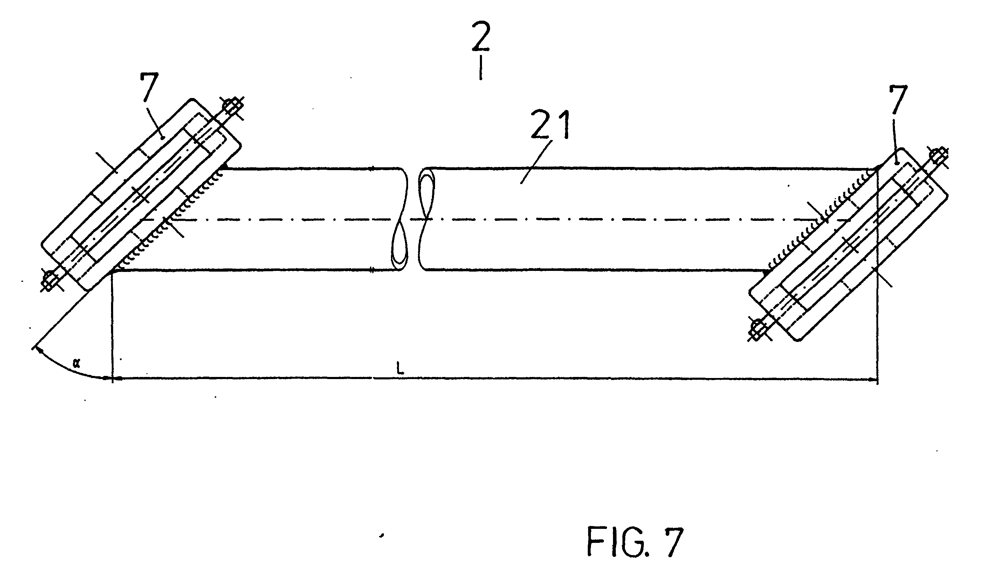

Fig. 4.2 zeigt in der linken Darstellung die Breitseite des Keilkopfes 7, auf der das Rohr 2.1 der unter dem Winkel α schräg abgeschnittenen Diagonalenstrebe (vgl. Fig. 7) aufsitzt und befestigt ist. Die rechte Darstellung zeigt eine schmale Stirnseite 9 mit der Aufnahmeöffnung 11, durch die bei der Montage der Diagonalenverstrebung am Ständerrohr 3 die Keiltasche 6 geschoben wird.

Gegenstand von Fig. 4.3 ist analog zu Fig. 4.1 die Unterseite 14 des Keilkopfes 7 mit der schlitzförmigen Öffnung 12, aus der bei der Montage der Keil 15 austritt.

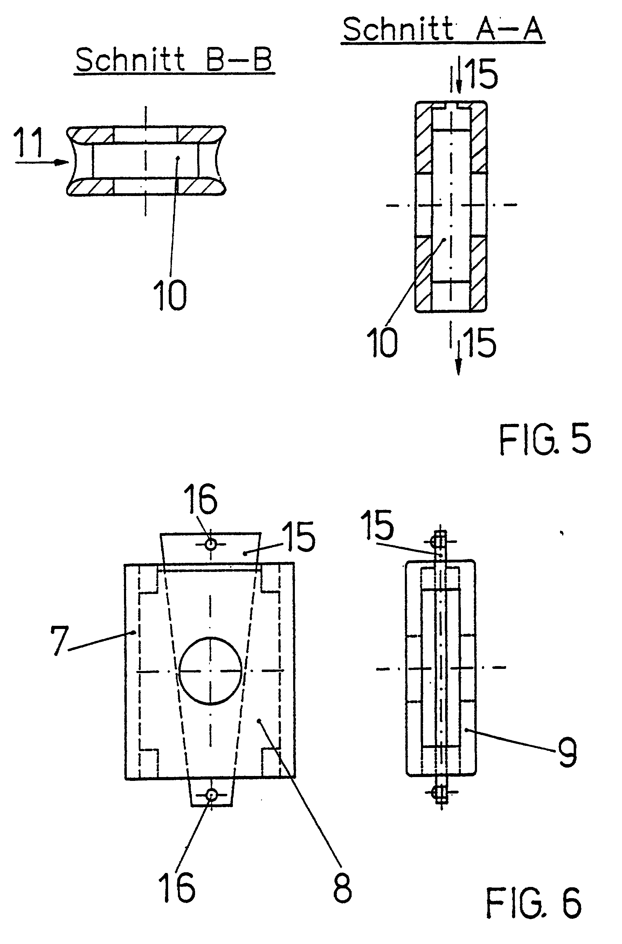

Die Schnitte A-A und B-B in Fig. 5 zeigen die Gestaltung des Hohlraumes 10 des Keilkopfes 7 sowie die Proportionen von Wandungsstärken und Hohlraum 10.
Der Hohlraum 10 dient über die Öffnungen 11 zur Aufnahme der Keiltasche 6 sowie über die Öffnungen 12 zur Führung des Keils 15. Die Wandungen an den Öffnungen 11 können im Einschubbereich abgerundet sein.

Fig. 6 zeigt die Front- bzw. Seitenansicht eines Keilkopfes 7 auf seine Breitseite 8 und seine schmale Stirnseite 9, wobei der Keil 15 eingeschoben ist, d.h. sich in Verriegelungsposition befindet.
Die Kerbstifte 16 im Keil 15 gewährleisten die erforderliche Beweglichkeit des Keils bei der Montage und Demontage; sie sichern die Unverlierbarkeit des Keils.

Fig. 7 veranschaulicht den Aufbau einer kompletten Diagonalenstrebe, bestehend aus Rohr 2.1 und Keilköpfen 7.
Die Länge L ist bei veränderlichem Winkel α variabel.

Fig. 8 zeigt die beschriebene Diagonalenverstrebung 2 bestehend aus Keilkopf 7 und Rohr 2.1 in Einbauposition. Der dargestellte Knoten 4 am Gerüstständer 3 besitzt vier Keiltaschen 6. Die rechte, nicht sichtbare Keiltasche 6 ist in den Keilkopf 7 über dessen Aufnahmeöffnung 11 in der schmalen Stirnseite 9 eingeschoben. Der Keil 15 ist eingelegt und durchläuft dabei die Öffnung 12 in der Oberseite 13 des Keilkopfes 7, die Keiltasche 6 und die Öffnung 12 in der Unterseite 14 des Keilkopfes 7, vgl. Fig. 6.
Die schmale Stirnseite 9 des Keilkopfes 7 mit der Auskehlung 9.1 wird mittels der durch den eingelegten Keil 15 hergestellten kraftschlüssigen Verbindung flächig an die Wandung des Ständerrohres 3 gepreßt.

Aus Fig. 9 geht der konstruktive Aufbau eines erfindungsgemäßen Gerüstknotens 4 mit Keiltaschen 6 und zwei eingehängten Horizontalriegeln 1 sowie einem eingehängten Diagonalriegel 2 hervor. Der Diagonalriegel 2 ist in Pfeilrichtung mittels der Aufnahmeöffnung 11 des Keilkopfes 7 so über die Keiltasche 6 geschoben, daß der Keilkopf 7 die Keiltasche 6 in sich aufnimmt und die Verriegelung der Paarung Keilkopf 7 - Keiltasche 6 in dieser Einbauposition durch den Keil 15 erfolgt.

### Liste der Bezugszeichen

- 1: Horizontalriegel, horizontale Anschlußelemente
- 2: Diagonalriegel, vertikaldiagonale Anschlußelemente 2.1 Diagonalenstrebe, Rohr von 2
- 3: Ständerrohr
- 4: Gerüstknoten
- 5: keilförmiges Steckelement,
5.1 Flanken
5.2 Stirnseite am Ständerrohr
5.3 Keilflächen-Schnittkante
- 6: Keiltasche
6.1 Aufnahmeöffnung
6.2 Seitenteile
- 7: Keilkopf
- 8: Breitseite von 7
- 9: schmale Stirnseite von 7
9.1 Auskehlung
- 10: Hohlraum in 7
- 11: Aufnahmeöffnung für Keiltasche 6
- 12: schlitzförmige Öffnung für Keil 15
- 13: Oberseite von 7
- 14: Unterseite von 7
- 15: Keil
- 16: Kerbstift

## Patentansprüche

1. Fachwerk-Modulgerüstsystem mit Ständerrohren (3), Horizontal- und Diagonalriegeln (1, 2) und zugehörigen Systembauteilen, wobei an jedem Ständerrohr (3) ein oder mehrere mit Abstand übereinander positionierte Gerüstknoten (4) angeordnet sind, die in der Grundausführung aus jeweils vier Keiltaschen (6) bestehen, in die über keilförmige Steckelemente (5, 15) Anschlußelemente der Riegel (1, 2) eingreifen,
wobei
a) zur Montage der Horizontalriegel (1) die keilförmigen Steckelemente (5) in mit vom Querschnitt der Steckelemente (5) abweichender Geometrie ausgeführte Keiltaschen (6) der Gerüstknoten (4) eingreifen, und die Aufnahmeöffnung (6.1) der mit parallelen Seitenteilen (6.2) ausgeführten Keiltaschen (6) in ihrer Weite um einen Spielraum von 2 x ca. 1 mm grösser ist als die Dicke der keilförmigen Steckelemente (5) oder die Seitenteile (6.2) der Keiltaschen (6) konisch aufeinander zu verlaufen,
und
b) zur Montage der Diagonalriegel (2) an jedem Ende einer Diagonalenstrebe (2.1) des Diagonalriegels ein Keilkopf (7) so angeordnet und aufgebaut ist, dass er auf der Keiltasche (6) aufsitzend am Ständerrohr (3) anliegt und mittels eines Keilkopf (7) und Keiltasche (6) durchlaufenden Keils (15) verriegelt ist,
**dadurch gekennzeichnet, dass** die keilförmigen Steckelemente (5) an ihrer vorderen und hinteren Keilflächen-Schnittkante (5.3) konkav nach innen gewölbte Keilflächen besitzen.

2. Fachwerk-Modulgerüstsystem nach Anspruch 1,
**dadurch gekennzeichnet, daß** die keilförmigen Steckelemente (5) mit balligem Querschnitt ausgeführt sind und dabei die Krümmung der Flanken (5.1), ausgehend von der zum Ständerrohr (3) weisenden Stirnseite (5.2) der keilförmigen Steckelemente (5) - beginnend mit dem Krümmungswinkel β = 0 - zunimmt.

3. Fachwerk-Modulgerüstsystem nach Anspruch 1 oder 2,
**dadurch gekennzeichnet, daß** die Keilflächen-.Schnittkanten (5.3) eine definierte Oberflächenrauhigkeit mit einer Rauhigkeitstiefe von 120 µm aufweisen.

4. Fachwerk-Modulgerüstsystem nach Anspruch 3,
**dadurch gekennzeichnet, daß** die konkave Wölbungstiefe w der Keilflächen-Schnittkanten (5.3) etwa 0,5 mm beträgt.

5. Fachwerk-Modulgerüstsystem nach einem der Ansprüche 1 bis 4,
**dadurch gekennzeichnet, daß** eine einzelne Vertikaldiagonalenstrebe (2) aus einem Rohr (2.1) der Länge L besteht, das an seinen beiden im Winkel α schräg geschnittenen Enden von einem etwa quaderförmigen als Hohlkörper ausgeführten Keilkopf (7) abgeschlossen wird, über den die Montage der Diagonalenstrebe (2) am Knoten (4) des Ständerrohres (3) erfolgt, wobei das Rohr (2.1) an der Breitseite (8) eines jeden Keilkopfes (7) anliegt und dabei zwischen der Senkrechten zur Längsachse des Rohres (2.1) sowie der Längsachse des Keilkopfes (7) der Winkel α eingeschlossen wird und der Keilkopf (7) darüber hinaus folgende Merkmale aufweist
a) der Keilkopf (7) besitzt an den schmalen Stirnseiten (9) paßfähig zur Krümmung des Ständerrohres (3) eine Auskehlung (9.1) und liegt in Einbauposition über diese Auskehlung (9.1) am Ständerrohres (3) an,
b) im Keilkopf (7) befindet sich ein Hohlraum (10), in den über die Aufnahmeöffnung (11) in den schmalen Stirnseiten (9) des Keilkopfes (7) eine Keiltasche (6) des Ständerrohres (3) eingeführt wird und
c) weitere, zu diesem Hohlraum (10) im Keilkopf (7) führende schlitzförmige Öffnungen (12) sind in der Oberseite (13) sowie in der Unterseite (14) des Keilkopfes (7) vorhanden, durch die der zur Formgebung der Öffnungen (12) paßfähige Keil (15) - die Öffnung (12) in der Oberseite (13), nachfolgend die Keiltasche (6) durchlaufend und aus der Öffnung (12) in der Unterseite (14) austretend - eingelegt wird, wodurch der Keilkopf (7) mit der ausgekehlten Stirnseite (9) an das Ständerrohr (3) gepreßt und damit die gesamte Vertikaldiagonalenverstrebung in Einbauposition fixiert und verspannt wird.

6. Fachwerk-Modulgerüstsystem nach Anspruch 5,
**dadurch gekennzeichnet, daß** der Keil (15) an seinem oberen breiteren Ende und seinem unteren schmaleren Ende je einen Kerbstift (16) besitzt, der ein Herausgleiten des Keils (15) aus den schlitzförmigen Öffnungen (12) in der Oberseite (13) oder Unterseite (14) des Keilkopfes (7) verhindert.

7. Fachwerk-Modulgerüstsystem nach Anspruch 5 und 6,
**dadurch gekennzeichnet, daß** der Keil (15) über seine gesamte Länge eine einheitliche Wandungsstärke aufweist, die kleiner ist als die Öffnungsweite der Keiltasche (6) und die Schlitzweite der Öffnungen (12).

8. Fachwerk-Modulgerüstsystem nach einem der Ansprüche 5 bis 7,
**dadurch gekennzeichnet, daß** die Länge und die konische Form des Keils (15) so ausgeführt ist, **daß** in Einbauposition der Keil (15) die Keiltasche (6) durchläuft, auf beiden Seiten (13, 14) des Keilkopfes (7) übersteht und durch die Flankenpressung des Keils (15) in der Keiltasche (6) die Stirnseite (9) des Keilkopfes (7) mit der Auskehlung (9.1) flächig an das Ständerrohr (3) preßt.

9. Fachwerk-Modulgerüstsystem nach einem der Ansprüche 5 bis 8,
**dadurch gekennzeichnet, daß** das Rohr (2.1) der Diagonalenstrebe in unterschiedlichen Längen L ausgeführbar ist, wobei mit wachsender Länge L der Winkel α für die Verbindung von Rohr (2.1) mit der Breitseite (8) des Keilkopfes (7) kleiner wird.

10. Fachwerk-Modulgerüstsystem nach einem der Ansprüche 1 bis 9,
**dadurch gekennzeichnet, daß** zur Erreichung der notwendigen Horizontalsteifigkeit für den Einsatz als Fassadengerüst auf den Horizontalriegeln (1) zwischen den Gerüstknoten (4) Rohrriegelauflagen mittels Krallen aufliegen und mittels selbsttätiger Aushebesicherung gesichert sind, wobei die Krallen am Rahmen der Rohrriegelauflagen befestigt sowie die Aushebesicherungen in den Rahmen der Rohrriegelauflagen integriert und von der Schwerkraft angetrieben sind.

## Claims

1. Truss modular scaffold system with tubular standards (3), horizontal and diagonal scaffold members (1, 2) and accompanying system components whereby on each tubular standard (3) one or several scaffold joints (4) placed above each other at a distance from each other are arranged, which in the basic version consist of four wedge pockets (6) each, with which connecting elements of the scaffold members (1, 2) through wedge-shaped plug-in elements (5, 15) engage,
whereby
a) for mounting of the horizontal scaffold members (1) the wedge-shaped plug-in elements (5) engage with wedge pockets (6) of the scaffold joints (4) made with a geometry different from that of the section of the wedge-shaped plug-in elements (5), and the mounting opening (6.1) of the wedge pockets (6) made with parallel side walls (6.2) is in its width wider by 2 × approx. 1mm than the thickness of the wedge-shaped plug-in elements (5) or the side walls (6.2) of the wedge pockets (6) conically approach each other
and
b) for mounting of the diagonal scaffold members (2), at each end of a diagonal brace (2.1) of the diagonal scaffold member a wedge head (7) is arranged and designed such that it, seated on the wedge pocket (6), bears against the tubular standard (3) and is locked by means of a wedge (15) passing through wedge head (7) and wedge pocket (6)
**characterized in that** the wedge-shaped plug-in elements (5) at their front and rear wedge surface intersecting side (5.3) have wedge surfaces curved to the inside.

2. Truss modular scaffold system to Claim 1
**characterized in that** the wedge-shaped plug-in elements (5) are made with a convex cross section whereby the curvature of the flank sides (5.1) increases beginning from the face side (5.2) of the wedge-shaped plug-in elements (5) turned to the tubular standard (3) with the angle of curvature β = 0.

3. Truss modular scaffold system to Claim 1 or 2
**characterized in that** the wedge surface intersecting side (5.3) have a predetermined surface roughness with a roughness height of 120 µm.

4. Truss modular scaffold system to Claim 3
**characterized in that** the curvature depth, w, of the wedge surface intersecting side (5.3) is approx. 0.5 mm.

5. Truss modular scaffold system to any of the Claims 1 to 4
**characterized in that** a single vertical diagonal brace (2) consists of a tube (2.1) of the length L, which is terminated at its both ends diagonally cut at an angle α with a wedge head (7) made as an approximately cuboid-shaped hollow body, through which the mounting of the diagonal brace (2) at the joint (4) of the tubular standard (3) is performed, whereby the tube (2.1) bears against the long side (8) of each wedge head (7) and, between the normal to the longitudinal axis of the tube (2.1) and the longitudinal axis of the wedge head (7), the angle α is included and the wedge head (7) has, additionally, the following features:
a) the wedge head (7) has, at each short face side (9), a recess (9.1) matching with the peripheral curvature of the tubular standard (3) and, in mounting position, bears to the tubular standard (3) via this recess (9.1),
b) the wedge head (7) has a hollow space (10), into which a wedge pocket (6) of the tubular standard (3) is entered through the mounting opening (11) in the short face sides (9) of the wedge head (7), and
c) other slot-shaped openings leading to this hollow space (10) in the wedge head (7) exist on the top side (13) as well as on the bottom side (14) of the wedge head (7), through which the wedge (15), which matches with the shape of the openings (12), entering through the opening (12) on the top side (13), subsequently passing the wedge pocket (6) and leaving through the opening (12) on the bottom side (14), is inserted, whereby the wedge head (7) is pressed against the tubular standard (3) with its recessed face side (9) thereby fixing and fastening the whole vertical diagonal bracing in the mounting position.

6. Truss modular scaffold system to Claim 5
**characterized in that** the wedge (15) has a notched taper pin each at its broader top end and its smaller bottom end which prevents sliding-out of the wedge (15) from the slot-shaped openings (12) on the top side (13) or bottom side (14) of the wedge head (7).

7. Truss modular scaffold system to Claim 5 and 6
**characterized in that** the wedge (15) has a unique wall thickness over its whole length, which is smaller than the width of the opening of the wedge pocket (6) and the width of the slot openings (12).

8. Truss modular scaffold system to any of the Claims 5 to 7
**characterized in that** the length and conical shape of the wedge (15) are made such that, in mounting position, the wedge (15) passes the wedge pocket (6), protrudes on both sides (13, 14) of the wedge head (7), and presses the face side (9) of the wedge head (7) with the recess (9.1) to the tubular standard (3) by the flank pressure of the wedge (15) in the wedge pocket (6).

9. Truss modular scaffold system to any of the Claims 5 to 8
**characterized in that** the tube (2.1) of the diagonal brace can be made in various lengths L, whereby with increasing length L the angle α for the connection of the tube (2.1) to the long side (8) of the wedge head (7) decreases.

10. Truss modular scaffold system to any of the Claims 1 to 9
**characterized in that** in order to achieve the necessary horizontal stiffness for use as a facade scaffold, tubular cross bar plates bear on the horizontal scaffold members (1) between the scaffold joints (4) by means of claws and are locked by automatic lift-off protection devices, whereby the claws are fastened to the frame of the tubular cross bar plates and the lift-off protection devices are integrated into the frame of the tubular cross bar plates and are driven by gravity.

## Revendications

1. Système d'échafaudage modulaire en treillis comprenant des montants tubulaires (3), des verrous horizontaux et diagonaux (1, 2) et des composants de système associés, une ou plusieurs intersections (4) de l'échafaudage, superposées à distance, étant implantées sur chaque montant tubulaire (3) et étant constituées, dans la réalisation de base, par quatre goussets cunéiformes (6) respectifs dans lesquels des éléments de raccordement des verrous (1, 2) pénètrent par l'intermédiaire d'éléments emboîtables cunéiformes (5, 15),
système dans lequel,
a) en vue du montage des verrous horizontaux (1), les éléments emboîtables cunéiformes (5) pénètrent dans des goussets cunéiformes (6) des intersections (4) de l'échafaudage, dont la géométrie diffère de la section transversale desdits éléments emboîtables (5), l'ouverture réceptrice (6.1) des goussets cunéiformes (6), réalisés avec des parties latérales parallèles (6.2), ayant une largeur intérieure supérieure à l'épaisseur des éléments emboîtables cunéiformes (5), selon une marge d'écart de 2 x environ 1 mm, ou lesdites parties latérales (6.2) desdits goussets cunéiformes (6) convergeant mutuellement en une forme conique,
et,
b) en vue du montage des verrous diagonaux (2), une tête cunéiforme (7) est disposée et structurellement agencée, à chaque extrémité d'une entretoise diagonale (2.1) dudit verrou diagonal, de manière qu'elle porte contre le montant tubulaire (3) en reposant sur le gousset cunéiforme (6), et soit verrouillée au moyen d'une cale (15) traversant ladite tête cunéiforme (7) est ledit gousset cunéiforme (6),
**caractérisé par** le fait que les éléments emboîtables cunéiformes (5) possèdent, sur les bords antérieur et postérieur (5.3) de leurs surfaces cunéiformes, des surfaces cunéiformes à bombement concave vers l'intérieur.

2. Système d'échafaudage modulaire en treillis selon la revendication 1,
**caractérisé par** le fait que les éléments emboîtables cunéiformes (5) sont réalisés de section transversale bombée, et la courbure des flancs (5.1) augmente alors - en commençant par l'angle de courbure β = 0 - à partir de la face extrême (5.2) desdits éléments emboîtables cunéiformes (5) qui est tournée vers le montant tubulaire (3).

3. Système d'échafaudage modulaire en treillis selon la revendication 1 ou 2,
**caractérisé par** le fait que les bords de découpe (5.3) des surfaces cunéiformes présentent une rugosité superficielle bien définie, avec une profondeur de rugosité de 120 µm.

4. Système d'échafaudage modulaire en treillis selon la revendication 3,
**caractérisé par** le fait que la profondeur du bombement concave w des bords de découpe (5.3) des surfaces cunéiformes mesure environ 0,5 mm.

5. Système d'échafaudage modulaire en treillis selon l'une des revendications 1 à 4,
**caractérisé par** le fait qu'une entretoise individuelle (2), verticale et diagonale, est constituée d'une tubulure (2.1) de longueur L s'achevant, à ses deux extrémités sectionnées à l'oblique selon l'angle α, par une tête cunéiforme (7) sensiblement rectangulaire qui est réalisée en tant que corps creux et par l'intermédiaire de laquelle s'opère le montage de l'entretoise diagonale (2) sur l'intersection (4) du montant tubulaire (3), sachant que la tubulure (2.1) est appliquée contre le côté large (8) de chaque tête cunéiforme (7), et que l'angle α est délimité entre la perpendiculaire à l'axe longitudinal de ladite tubulure (2.1), ainsi qu'à l'axe longitudinal de la tête cunéiforme (7), ladite tête cunéiforme (7) présentant en outre les caractéristiques suivantes :
a) la tête cunéiforme (7) possède une gorge (9.1) sur les faces extrêmes étroites (9), avec faculté d'adaptation à la courbure du montant tubulaire (3), et est appliquée contre ledit montant tubulaire (3) en position d'intégration, par l'intermédiaire de cette gorge (9.1),
b) la tête cunéiforme (7) renferme une cavité (10) dans laquelle un gousset cunéiforme (6) du montant tubulaire (3) est introduit par l'intermédiaire de l'ouverture réceptrice (11) pratiquée dans les faces extrêmes étroites (9) de ladite tête cunéiforme (7), et
c) des ouvertures supplémentaires (12) en forme de fentes, menant à cette cavité (10) ménagée dans la tête cunéiforme (7), sont présentes dans la face supérieure (13), ainsi que dans la face inférieure (14) de ladite tête cunéiforme (7), ouvertures à travers lesquelles est engagée la cale (15) adaptable à la configuration desdites ouvertures (12) - en franchissant l'ouverture (12) pratiquée dans la face supérieure (13), puis le gousset cunéiforme (6), et en sortant par l'ouverture (12) pratiquée dans la face inférieure (14) -, de sorte que la tête cunéiforme (7) est pressée contre le montant tubulaire (3) par la face extrême (9) dépouillée, et que l'ensemble de l'entretoisement vertical et diagonal est ainsi consigné à demeure et bloqué en position d'intégration.

6. Système d'échafaudage modulaire en treillis selon la revendication 5,
**caractérisé par** le fait que la cale (15) possède, à son extrémité supérieure plus large et à son extrémité inférieure plus étroite, une goupille fendue (16) respective qui empêche un ripage de ladite cale (15) hors des ouvertures (12) en forme de fentes, pratiquées dans la face supérieure (13) ou la face inférieure (14) de la tête cunéiforme (7).

7. Système d'échafaudage modulaire en treillis selon les revendications 5 et 6,
**caractérisé par** le fait que la cale (15) présente, sur toute sa longueur, une épaisseur de paroi unitaire plus petite que la largeur intérieure d'ouverture du gousset cunéiforme (6), et que la largeur de fente des ouvertures (12).

8. Système d'échafaudage modulaire en treillis selon l'une des revendications 5 à 7,
**caractérisé par** le fait que la longueur et la forme conique de la cale (15) sont conçues de façon telle que, en position d'intégration, ladite cale (15) traverse le gousset cunéiforme (6), dépasse au-delà des deux faces (13, 14) de la tête cunéiforme (7) et presse la face extrême (9) de ladite tête cunéiforme (7) à plat contre le montant tubulaire (3), par la gorge (9.1), par suite de la compression des flancs de ladite cale (15) dans le gousset cunéiforme (6).

9. Système d'échafaudage modulaire en treillis selon l'une des revendications 5 à 8,
**caractérisé par** le fait que la tubulure (2.1) de l'entretoise diagonale peut être réalisée en des longueurs L différentes, un accroissement de la longueur L impliquant une diminution de l'angle α assigné à la liaison de ladite tubulure (2.1) avec le côté large (8) de la tête cunéiforme (7).

10. Système d'échafaudage modulaire en treillis selon l'une des revendications 1 à 9,
**caractérisé par** le fait que, pour obtenir la rigidité horizontale nécessaire en vue de l'utilisation en tant qu'échafaudage de façade, des traverses tubulaires d'appui reposent sur les verrous horizontaux (1) au moyen de crampons, entre les intersections (4) de l'échafaudage, et sont arrêtées au moyen d'une sûreté automatique interdisant un soulèvement, les crampons étant fixés au cadre desdites traverses tubulaires d'appui, et les sûretés antisoulèvement étant intégrées dans ledit cadre des traverses tubulaires d'appui, et entraînées par gravité.
